# FASCICULE DE BREVET EUROPEEN

(11) **EP 0 969 226 B1**
(45) Date de publication et mention de la délivrance du brevet: **26.11.2003**
(21) Numéro de dépôt: 99401554.3
(22) Date de dépôt: 23.06.1999
(51) Int. Cl.: F16H 7/06, F16H 55/30, B66F 13/00

(54) **Dispositif d'entraînement des maillons d'une chaîne de poussée**
Antriebsvorrichtung für die Glieder einer Schubkette
Device for driving the links of a thrust chain

(30) Priorité: 24.06.1998 FR 9807989
(43) Date de publication de la demande: 05.01.2000
(73) Titulaire: Serapid France, 76510 Saint-Nicolas-d'Aliermont (FR)
(72) Inventeur: Bourc'his, Joel, 76510 Saint-Nicolas (FR); Novick, Philippe, 76630 Envermeu (FR)
(74) Mandataire: Cabinet HERRBURGER

(56) Documents cités:
- DE-C- 294 461
- FR-A- 1 297 285
- US-A- 2 704 942
- US-A- 2 739 486
- US-A- 5 320 582

## Description

La présente invention concerne un dispositif d'entraînement des maillons d'une chaîne de poussée au niveau d'une extrémité courbe de celle-ci, conformément au préambule de la revendication 1.

Les chaînes de poussée ont une structure particulière qui leur permet de transmettre des efforts non seulement de traction, à la façon des chaînes classiques, mais encore de poussée, car elles se comportent alors comme de véritables barres rigides en une seule pièce.

De telles chaînes de poussée ont, à titre d'exemple, déjà été décrites dans les documents FR-1 297 285 ou FR-2 061 884.

Celles-ci sont classiquement constituées par une succession de maillons articulés les uns sur les autres au moyen d'axes dirigés transversalement. Chaque maillon comporte deux joues essentiellement parallèles respectivement percées de deux trous de réception des axes d'articulation et équipées, chacune, d'un prolongement définissant une face active transversale avant et une face active transversale arrière appelées à prendre appui, respectivement, contre les faces actives transversales arrière et avant des joues des maillons voisins lorsque le tronçon de chaîne, dont font partie les maillons considérés, s'étend suivant une ligne droite.

De telles chaînes de poussée sont classiquement entraînées, au niveau d'une extrémité courbe, par un dispositif comportant un carter, un pignon rotatif d'axe parallèle aux axes d'articulation des maillons, monté dans le carter et sur lequel s'enroule la chaîne, ainsi que des galets de roulements montés fous et destinés au guidage des maillons de la chaîne autour du pignon rotatif.

Plus précisément, conformément à l'art antérieur susmentionné, les galets de roulement sont montés au centre des axes séparant les joues des différents maillons et sont destinés à se loger dans les creux séparant les dents du pignon rotatif ; les différents maillons coopèrent par ailleurs, au niveau de l'extrémité courbe de la chaîne de poussée, avec une plaque de réaction solidaire du carter définissant un chemin de guidage.

Une telle configuration permet un entraînement relativement satisfaisant de la chaîne de poussée mais présente l'inconvénient d'être relativement onéreuse, compte tenu de la nécessité d'équiper de galets de roulement les axes d'articulation de tous les maillons.

De plus, l'expérience a montré que l'on peut ainsi se heurter à des problèmes consécutifs au frottement dans le cas d'entraînement à vitesse élevée de la chaîne de poussée.

La présente invention a pour objet de remédier à ces inconvénients en proposant un dispositif d'entraînement des maillons d'une chaîne de poussée permettant de plus grandes vitesses avec des cadences plus importantes, et ce avec un moins grand nombre de pièces.

A cet effet, l'invention concerne un dispositif d'entraînement du type susmentionné caractérisé en ce que les galets de roulement sont montés, non plus sur les axes des maillons de la chaîne, mais sur le pignon rotatif, ce autour d'axes parallèles aux axes d'articulation des maillons, ces galets coopérant avec ces axes lorsque ceux-ci sont logés dans les creux séparant les dents du pignon rotatif.

Il est clair qu'une telle configuration permet de diminuer notablement le nombre de galets de roulement nécessaires.

Il est à noter que, de façon connue en elle-même, le pignon rotatif comporte, en règle générale, deux flasques identiques assemblés parallèlement l'un à l'autre par tout moyen convenable tel que par exemple des vis et définissant entre eux un espace annulaire.

Conformément à cette configuration, les galets de roulement sont avantageusement montés dans cet espace annulaire.

Selon une autre caractéristique de l'invention, les galets de roulement sont respectivement montés au niveau de l'axe radial de chacune des dents du pignon rotatif.

La géométrie du pignon rotatif et en particulier son nombre de dents dépendent dans chaque cas de la nature de la chaîne de poussée devant être entraînée et de la fonction de celle-ci ; l'expérience a montré qu'un pignon rotatif comportant six dents équipées chacune d'un galet de roulement donne souvent satisfaction.

Selon une autre caractéristique de l'invention, les axes d'articulation de chacun des maillons sont équipés à leurs extrémités de galets de guidage mobiles dans des rails latéraux solidaires du carter.

La présence de ces rails est indispensable pour obtenir un guidage suffisant de la chaîne de poussée, que celle-ci soit entraînée en traction (rotation du pignon rotatif commandée dans un premier sens) ou en poussée (rotation du pignon rotatif commandée dans un second sens opposé au premier).

Selon une autre caractéristique de l'invention, l'axe du pignon rotatif est décalé par rapport à l'axe de l'extrémité courbe de la chaîne de poussée.

Conformément à cette caractéristique, le guidage ne s'effectue que de part et d'autre du pignon rotatif alors que la chaîne de poussée est laissée libre dans sa partie courbe, ce qui contribue à diminuer le frottement de façon à permettre d'obtenir une plus grande vitesse et des cadences plus importantes.

Il est à noter que, compte tenu de cette configuration, cette chaîne de poussée ne s'enroule pas à proprement parler autour du pignon rotatif mais est déplacée par celle-ci d'une manière pouvant être assimilée à une crémaillère.

Les caractéristiques du dispositif, qui fait l'objet de l'invention, seront décrites plus en détail en se référant aux dessins annexés dans lesquels :
- la figure 1 représente, en coupe suivant la ligne I-I de la figure 2, un dispositif d'entraînement selon l'invention,
- la figure 2 est une coupe transversale partielle suivant la ligne II-II de la figure 1.

Selon les figures, le dispositif conforme à l'invention permet d'entraîner en traction ou en poussée les maillons 2 d'une chaîne de poussée 1 au niveau d'une extrémité courbe 3 de celle-ci.

Il est à noter que la configuration de ces maillons, qui peut à titre d'exemple correspondre aux configurations décrites dans les documents FR-1 297 285 ou FR-2 061 884, ne fait pas partie de l'invention.

Dans tous les cas et selon les figures, la chaîne 1 est constituée par une succession de maillons 2 articulés les uns sur les autres au moyen d'axes 4, 4' dirigés transversalement.

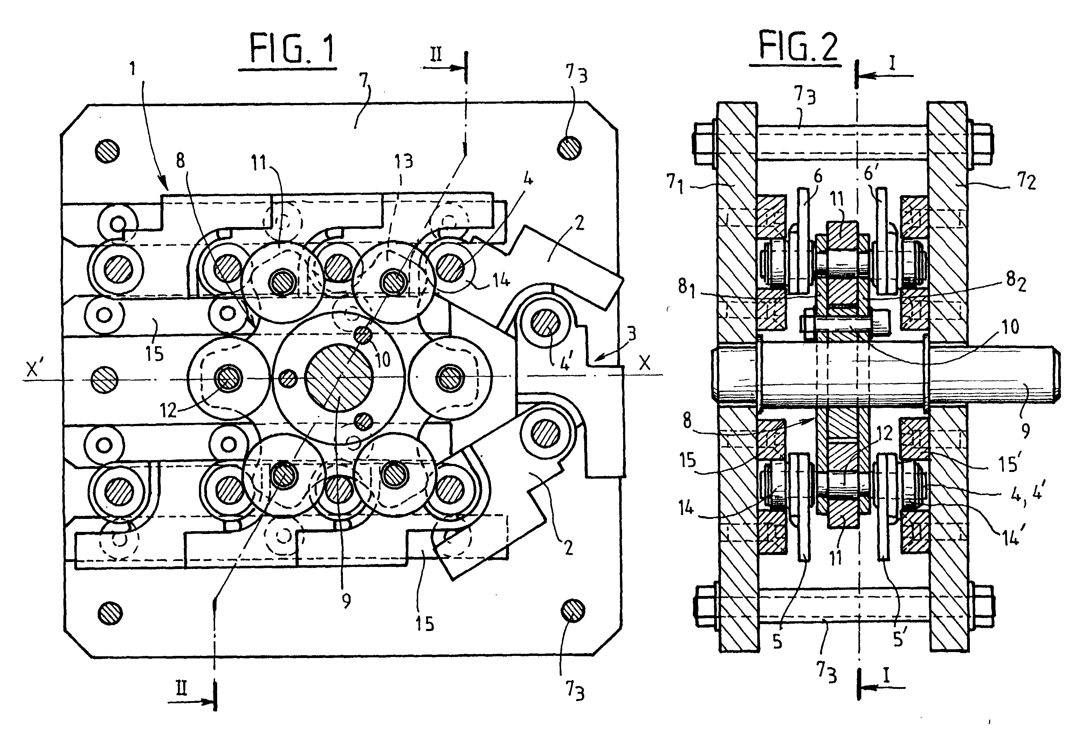

Selon la figure 2, chaque maillon 2 comporte deux joues 5, 5' essentiellement parallèle respectivement percées de deux trous de réception des axes d'articulation 4, 4' et équipées chacune d'un prolongement 6, 6' définissant une face active transversale avant et une face active transversale arrière appelées à prendre appui respectivement contre les faces actives transversales arrière et avant des joues 5', 5 des maillons 2 voisins lorsque le tronçon de chaîne dont font partie les maillons considérés s'étend selon une ligne droite.

Comme il a déjà été indiqué, il s'agit là d'une configuration connue en elle-même qui, pour cette raison, ne sera pas décrite plus en détail dans cet exposé.

Selon les figures 1 et 2, le dispositif d'entraînement comporte essentiellement un carter 7 équipé de deux flasques latéraux 7₁, 7₂, reliés par des entretoises 7₃, entre lesquels est monté un pignon rotatif 8 sur lequel passe la chaîne 1 au niveau de son extrémité courbe 3 ; l'axe 9 de ce pignon 8 est parallèle aux axes d'articulation 4, 4' des maillons 2.

Le pignon rotatif 8 peut être entraîné en rotation autour de son axe 9 par des organes de commande non représentés dans un sens ou dans un autre, selon que la chaîne de poussée 1 doit être entraînée en traction ou en poussée.

Selon la figure 2, le pignon rotatif 8 comporte deux flasques dentés 8₁, 8₂ identiques assemblés parallèlement l'un à l'autre au moyen de vis 10.

Ces flasques 8₁, 8₂ définissent entre eux un espace annulaire dans lequel sont logés des galets de roulement 11 qui sont montés fous autour d'axes 12 parallèles aux axes d'articulation 4, 4' des maillons 2 ainsi qu'à l'axe de rotation 9 du pignon rotatif 8 ; les extrémités des axes 12 sont respectivement fixées aux flasques 8₁, 8₂ du pignon 8.

Selon la figure 1, les galets de roulement 11 sont axés sur l'axe radial x-x' de chacune des dents 13 du pignon rotatif 8.

Conformément à la configuration représentée sur cette figure, le pignon rotatif 8 comporte six dents 13 équipées chacune d'un galet de roulement 11. Bien entendu, cette configuration n'a été choisie qu'à titre d'exemple et ne doit, en aucune manière, être considérée comme étant limitative de l'invention.

Selon la figure 1, l'axe 9 du pignon rotatif est décalé par rapport à l'extrémité courbe 3 de la chaîne de poussée, ce qui fait que cette chaîne ne vient en prise avec le pignon 8 qu'au niveau de ses tronçons rectilignes situés de part et d'autre de celui-ci alors qu'elle est non entraînée au niveau de son extrémité courbe 3.

Lorsque le pignon rotatif 8 se déplace en rotation autour de son axe 9, les axes 4, 4' des maillons 2 de la chaîne 1 viennent successivement se loger dans les creux séparant les dents 13 de ce pignon 8 de part et d'autre de celui-ci, entraînant ainsi le déplacement de la chaîne 1.

Par ailleurs, et comme représenté sur la figure 2, les axes d'articulation 4, 4' des maillons 2 sont équipés à leurs extrémités de galets de guidage 14, 14' situés à l'extérieur des joues 5, 5' et coopérant avec des rails de guidage latéraux 15, 15' prévus sur les flasques latéraux 7₁, 7₂ du carter 7 de façon à permettre un guidage et verrouillage longitudinal de la chaîne au niveau de ses extrémités.

## Revendications

1. Dispositif d'entraînement des maillons (2) d'une chaîne de poussée (1) au niveau d'une extrémité courbe (3) de celle-ci, cette chaîne de poussée étant constituée par une succession de maillons (2) articulés les uns sur les autres, au moyen d'axes (4, 4') dirigés transversalement, chaque maillon comportant deux joues (5, 5') essentiellement parallèles respectivement percées de deux trous de réception des axes d'articulation et équipées, chacune, d'un prolongement (6, 6') definissant une face active transversale avant et une face active transversale arrière appelées à prendre appui, respectivement contre les faces actives transversales arrière et avant des joues des maillons voisins lorsque le tronçon de chaîne dont font partie les maillons considérés s'étend selon une ligne droite, dispositif d'entraînement comportant un carter (7), un pignon rotatif (8) d'axe (9) parallèle aux axes d'articulation des maillons, monté dans le carter et sur lequel passe la chaîne, ainsi que des galets de roulements (11) montés fous et destinés au guidage des maillons de la chaîne autour du pignon rotatif,
**caractérisé en ce que**
- les galets de roulement (11) sont montés sur le pignon rotatif (8) autour d'axes (12) parallèles aux axes d'articulation (4, 4') des maillons (2) et coopèrent avec ces axes lorsque ceux-ci sont logés dans les creux séparant les dents (13) du pignon rotatif (8)et
- l'axe (9) du pignon rotatif (8) est décalé par rapport à l'extrémité courbe (3) de la chaîne de poussée (1) .

2. Dispositif selon la revendication 1,
**caractérisé en ce que**
le pignon rotatif (8) comporte deux flasques identiques (8₁, 8₂) fixés parallèlement l'un à l'autre et définissant entre eux un espace annulaire dans lequel sont montés les galets de roulement (11).

3. Dispositif selon l'une quelconque des revendications 1 et 2,
**caractérisé en ce que**
les galets de roulement (11) sont respectivement montés au niveau de l'axe radial (x-x') de chacune des dents (13) du pignon rotatif (8) .

4. Dispositif selon la revendication 3,
**caractérisé en ce que** le pignon rotatif (8) comporte six dents (13) équipées chacune d'un galet de roulement (11).

5. Dispositif selon l'une quelconque des revendications 1 à 4,
**caractérisé en ce que**
les axes d'articulation (4, 4') de chacun des maillons (2) sont équipés à leurs extrémités de galets de guidage (14, 14') mobiles dans des rails latéraux (15, 15') solidaires du carter (7).

## Claims

1. System for driving links (2) of a gear chain (1) on a level with a curved end (3) thereof, this gear chain being made up of a succession of links (2) each articulated about the other by means of transversely directed axles (4,4'), each link having two substantially parallel cheeks (5,5') each provided with bores for accommodating the articulation axles and each having an extension (6,6') defining a transverse front active face and a transverse rear active face supported respectively on transverse rear and front active faces of the cheeks of adjacent links when the length of chain incorporating these links extends in a straight line, which drive system has a housing (7), a rotating pinion (8) mounted in the housing with an axis (9) parallel with the articulation axles of the links, across which the chain passes, as well as loosely mounted running wheels (11) designed to guide the links of the chain around the rotating pinion,
**characterised in that**
- the running wheels (11) are mounted on the rotating pinion (8) about axes (12) parallel with the articulation axles (4,4') of the links (2) and cooperate with these axles when the latter locate in the hollows separating the teeth (13) of the rotating pinion (8) and
- the axis (9) of the rotating pinion (8) is offset from the curved end (3) of the gear chain (1).

2. System as claimed in claim 1, **characterised in that** the rotating pinion (8) has two identical flanges (8₁,8₂) secured parallel with one another and defining between them an annular space in which the running wheels (11) are mounted.

3. System as claimed in any one of claims 1 and 2, **characterised in that** the running wheels (11) are mounted respectively on a level with the radial axis (x-x 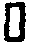 ) of each of the teeth (13) of the rotating pinion (8).

4. System as claimed in claim 3, **characterised in that** the rotating pinion (8) has six teeth (13), each cooperating with a running wheel (11).

5. System as claimed in any one of claims 1 to 4, **characterised in that** guide wheels (14,14') are provided at the ends of the articulation axles (4,4') of each of the links (2), which move in side rails (15,15') joined to the housing (7).

## Patentansprüche

1. Antriebsvorrichtung für die Glieder (2) einer Schubkette (1) in Höhe eines gekrümmten Endes (3) dieser Kette, wobei diese Schubkette aus einer Abfolge von Gliedern (2) besteht, die mit Hilfe von quer geführten Achsbolzen (4, 4') beweglich miteinander verbunden sind, wobei jedes Glied zwei im Wesentlichen parallele Wangen (5, 5') aufweist, die jeweils über zwei Öffnungen zur Aufnahme von Gelenkstiften verfügen und von denen jede mit einer Verlängerung (6, 6') versehen ist, die eine vordere quer gerichtete Wirkfläche und eine hintere quer gerichtete Wirkfläche bestimmt, die jeweils als Auflager für die hinteren und vorderen quer gerichteten Wirkflächen der Wangen der benachbarten Glieder dienen, wenn der Kettenabschnitt, zu dem die betreffenden Glieder gehören, sich entlang einer Geraden bewegt; Antriebsvorrichtung, bestehend aus einem Gehäuse (7), einem drehbaren Ritzel (8), dessen Achse (9) parallel zu den Gelenkbolzen der Glieder verläuft, das im Gehäuse befestigt ist und über das die Kette läuft, sowie aus lose befestigten Laufrollen (11), die zur Führung der Kette um das drehbare Ritzel dienen, **dadurch gekennzeichnet, dass**
- die Laufrollen (11) auf dem drehbaren Ritzel (8) um Achsen (12) herum befestigt sind, die zu den Gelenkbolzen (4, 4') der Glieder (2) parallel angeordnet sind und mit diesen Bolzen zusammenwirken, wenn diese sich in den Aussparungen zwischen den Zähnen (13) des drehbaren Ritzels (8) befinden, und
- die Achse (9) des drehbaren Ritzels (8) in Bezug auf das gekrümmte Ende (3) der Schubkette (1) versetzt ist.

2. Vorrichtung nach Anspruch 1, **dadurch gekennzeichnet, dass** das drehbare Ritzel (8) zwei gleichartige Flansche (8₁, 8₂) aufweist, die zueinander parallel befestigt sind und zwischen sich einen ringförmigen Raum bestimmen, in dem die Laufrollen (11) befestigt sind.

3. Vorrichtung nach einem der Ansprüche 1 und 2,**dadurch gekennzeichnet, dass** die Laufrollen (11) jeweils in Höhe der Radialachse (x-x') jedes einzelnen Zahns (13) des drehbaren Ritzels (8) befestigt sind.

4. Vorrichtung nach Anspruch 3, **dadurch gekennzeichnet, dass** das drehbare Ritzel (8) sechs Zähne (13) aufweist, die jeweils über eine Laufrolle (11) verfügen.

5. Vorrichtung nach einem der Ansprüche 1 bis 4, **dadurch gekennzeichnet, dass** die Gelenkbolzen (4, 4') jedes der Glieder (2) an ihren Enden mit Führungsrollen (14, 14') versehen sind, die in seitlichen Schienen (15, 15') verlaufen, die mit dem Gehäuse (7) fest verbunden sind.
